# EUROPEAN PATENT SPECIFICATION

(11) **EP 2 942 984 B1**
(45) Date of publication and mention of the grant of the patent: **21.08.2019**
(21) Application number: 13874672.2
(22) Date of filing: 06.02.2013
(51) Int. Cl.: H04W 4/06

(54) **METHOD, BASE STATION AND USER EQUIPMENT FOR DATA TRANSMISSION AND ACQUISITION**
VERFAHREN, BASISSTATION UND BENUTZERVORRICHTUNG FÜR DATENÜBERTRAGUNG UND -ERFASSUNG
PROCÉDÉ, STATION DE BASE ET ÉQUIPEMENT D'UTILISATEUR DE TRANSMISSION ET D'ACQUISITION DE DONNÉES

(43) Date of publication of application: 11.11.2015
(73) Proprietor: Huawei Technologies Co., Ltd., Longgang District Shenzhen, Guangdong 518129 (CN)
(72) Inventor: ZHANG, Jian, Shenzhen Guangdong 518129 (CN); HAN, Guanglin, Shenzhen Guangdong 518129 (CN)
(74) Representative: Gill Jennings & Every LLP
(86) International application number: PCT/CN2013/071473
(87) International publication number: WO 2014/121471

(56) References cited:
- WO-A1-2010/102443
- WO-A1-2012/063950
- CN-A- 101 060 617
- CN-A- 101 146 255
- CN-A- 101 163 260
- CN-A- 101 163 320
- CN-A- 101 369 874
- CN-A- 102 300 168
- US-A1- 2007 168 523
- US-A1- 2012 163 274
- US-A1- 2013 028 118

## Description

### TECHNICAL FIELD

The present invention relates to the communications field, and in particular, to a method for transmitting data, a method for acquiring data, a base station, and user equipment.

### BACKGROUND

In an existing mobile communications system, a unicast or multicast mode is generally used to transmit data to user equipment (UE).

When the unicast mode is used to transmit data, a service center (SC) establishes a separate unicast transmission channel for each UE by using an evolved base station (Evolved NodeB, eNodeB), and even if different UEs acquire same data, the data needs to be sent to each UE once by using the separate unicast transmission channel. This method for transmitting data requires high bandwidth overheads and high costs in use.

When the multicast mode is used to transmit data, multiple UEs acquire same data and can access a network at any time, and a service center only needs to establish, by using an eNodeB, one multicast transmission channel for the multiple UEs that access the network. The same data that the multiple UEs need to acquire needs to be sent only once by using the multicast transmission channel, so that the multiple UEs can acquire the data from the multicast transmission channel. However, UE that accesses the network first needs to wait for other UEs to access the network, and then the multicast transmission channel is established, and the multiple UEs simultaneously acquire the data from a moment at which multicast starts. Therefore, although this method for transmitting data solves the problems of high bandwidth overheads and high costs in use, a problem of long waiting time of a user is caused.

Therefore, it can be seen that the prior art cannot enable a user to acquire required data at earliest time while ensuring low bandwidth overheads.

WO 2012/063950, US 2013/028118, US 2007/168523 and US 2012/163274 all disclose data transmission methods with corresponding user equipment and base stations.

In view of this, embodiments of the present invention provide a method for transmitting data, a method for acquiring data, a base station, and user equipment, so as to enable, while ensuring bandwidth saving, a user to acquire data immediately after the user accesses a network.

According to a first aspect, an embodiment of the present invention provides a method for transmitting data, wherein the method comprises: acquiring a data set to be sent to a wireless user equipment, UE; determining, according to a status of the UE that receives the data set, a transmission mode for transmitting the data set, wherein the transmission mode comprises a unicast mode or a multicast mode; and if a quantity of UEs that receive the data set is not less than a preset threshold, and a channel quality difference between multiple UEs that receive the data set is less than a second preset threshold, determining that the transmission mode for transmitting the data set is the multicast mode; or if a quantity of UEs that receive the data set is less than a preset threshold and a channel quality difference between multiple UEs that receive the data set is not less than a second preset threshold, determining that the transmission mode for transmitting the data set is the unicast mode, when the determined transmission mode is the same as an original transmission mode and the status of the UE changes, or when the determined transmission mode is different from an original transmission mode, configuring a transmission channel to the UE according to the determined transmission mode; and sending the data set to the UE by using a transmission channel that corresponds to the determined transmission mode.

With reference to a first possible implementation manner of the first aspect the configuring a transmission channel to the UE according to the determined transmission mode includes: sending a transmission mode configuration message to the UE, where the transmission mode configuration message is used to instruct the UE to acquire the data set from the transmission channel that corresponds to the determined transmission mode.

In a second possible implementation manner of the first aspect, the determining, according to a status of the UE that receives the data set, a transmission mode for transmitting the data set is specifically: if a channel quality difference between multiple UEs that receive the data set is less than a preset threshold, determining that the transmission mode for transmitting the data set is the multicast mode; or if a channel quality difference between multiple UEs that receive the data set is not less than a preset threshold, determining that the transmission mode for transmitting the data set is the unicast mode.

According to a second aspect, an embodiment of the present invention provides a base station, wherein the base station comprises: an acquiring unit, configured to acquire a data set to be sent to a wireless UE; a determining unit, configured to determine, according to a status of the UE that receives the data set, a transmission mode for transmitting the data set, wherein the transmission mode comprises a unicast mode or a multicast mode; and a data sending unit, configured to send the data set to the UE by using a transmission channel that corresponds to the determined transmission mode, wherein the base station further comprises: a configuring unit, configured to: when the determined transmission mode is the same as an original transmission mode and the status of the UE changes, or when the determined transmission mode is different from an original transmission mode, configure a transmission channel to the UE according to the determined transmission mode, and wherein the determining unit is specifically configured to determine: if a quantity of UEs that receive the data set is not less than a preset threshold, and a channel quality difference between multiple UEs that receive the data set is less than a second preset threshold, determine that the transmission mode for transmitting the data set is the multicast mode; or if a quantity of UEs that receive the data set is less than a preset threshold and a channel quality difference between multiple UEs that receive the data set is not less than a second preset threshold, determine that the transmission mode for transmitting the data set is the unicast mode.

With reference to the second aspect, in a first possible implementation manner, the configuring unit is further configured to send a transmission mode configuration message to the UE, where the transmission mode configuration message is used to instruct the UE to acquire the data set from the transmission channel that corresponds to the determined transmission mode.

In a second possible implementation manner of the second aspect, the determining unit is specifically configured to: if a channel quality difference between multiple UEs that receive the data set is less than a preset threshold, determine that the transmission mode for transmitting the data set is the multicast mode; or if a channel quality difference between multiple UEs that receive the data set is not less than a preset threshold, determine that the transmission mode for transmitting the data set is the unicast mode.

By using the method for transmitting data, the method for acquiring data, the base station, and the user equipment that are provided in the present invention, a transmission mode for transmitting a data set is determined according to a status of UE that receives the data set, and the data set is transmitted by using a transmission channel that corresponds to the determined transmission mode. The transmission mode varies with the status of the UE. Therefore, the UE can immediately acquire the data set no matter when the UE accesses a network, and an objective of saving bandwidth can be achieved. The invention is defined by the claims following this description.

### BRIEF DESCRIPTION OF DRAWINGS

FIG. 1 is a flowchart of a method for transmitting data according to Embodiment 1 of the present invention;
FIG. 2 is a flowchart of a method for acquiring data according to Embodiment 2 of the present invention;
FIG. 3 is a schematic structural diagram of a base station according to Embodiment 3 of the present invention;
FIG. 4 is a schematic structural diagram of a base station according to Embodiment 4 of the present invention;
FIG. 5 is a schematic structural diagram of user equipment according to Embodiment 5 of the present invention; and
FIG. 6 is a schematic structural diagram of user equipment according to Embodiment 6 of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some but not all of the embodiments of the present invention. All other embodiments obtained by a person of ordinary skill in the art based on the embodiments of the present invention without creative efforts shall fall within the protection scope of the present invention.

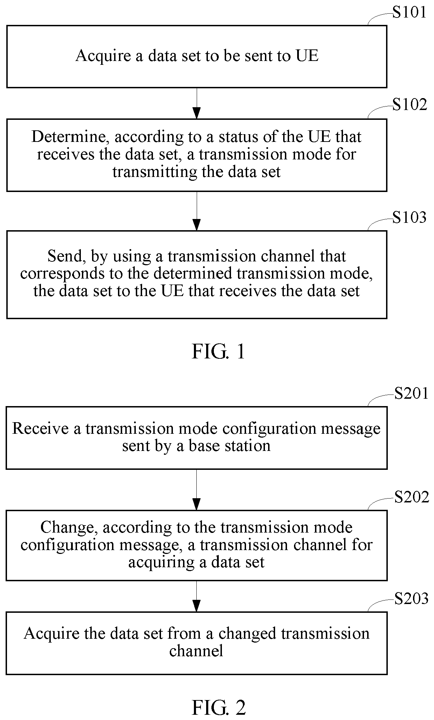

A method for transmitting data provided in Embodiment 1 of the present invention is described in detail below by using FIG. 1 as an example. FIG. 1 is a flowchart of a method for transmitting data according to Embodiment 1 of the present invention. The method for transmitting data is executed by a base station. As shown in FIG. 1, the method for transmitting data includes the following steps:
Step S101: Acquire a data set to be sent to UE.

UEs that access a network at different moments may need to acquire a same data set, and therefore, a same data set needs to be sent to multiple UEs. However, because UEs that receive a same data set may access a network at different time, statuses of multiple UEs that receive each data set are also different. In order to ensure that a user can acquire required data at earliest time while saving bandwidth, a base station needs to determine a transmission mode of each data set for each data set.

Step S102: Determine, according to a status of the UE that receives the data set, a transmission mode for transmitting the data set.

The transmission mode is a unicast mode or a multicast mode. A quantity of UEs that receive the data set is one or more.

Optionally, the base station determines, according to a quantity of UEs that receive the data set, the transmission mode for transmitting the data set. Specifically, the base station presets a threshold as a condition for changing the transmission mode, and if the quantity of UEs that receive the data set (including UEs that receive the data set at any moment after a current moment) is not less than the preset threshold, determines that the transmission mode for transmitting the data set to these UEs is the multicast mode; or if the quantity of UEs that receive the data set is less than the preset threshold, determines that the transmission mode for transmitting the data set to these UEs is the unicast mode.

For example, the threshold preset by the base station is 5. If the quantity of UEs that receive the data set is 7, that is, not less than the preset threshold of 5, it is determined that the transmission mode for transmitting the data set to the seven UEs is the multicast mode; if the quantity of UEs that receive the data set is 2, that is, less than the preset threshold of 5, it is determined that the transmission mode for transmitting the data set to the two UEs is the unicast mode.

Optionally, the base station determines, according to a channel quality difference between multiple UEs that receive the data set, the transmission mode for transmitting the data set. Specifically, the base station presets a threshold as a condition for changing the transmission mode, and if the channel quality difference between the multiple UEs that receive the data set is not less than the preset threshold, determines that the transmission mode for transmitting the data set to these UEs is the multicast mode; or if the channel quality difference between the multiple UEs that receive the data set is less than the preset threshold, determines that the transmission mode for transmitting the data set to these UEs is the unicast mode.

It should be noted that if a channel quality difference between UEs is relatively large, it is relatively difficult to ensure reliability of transmission of the data set; because UEs with different channel quality generally need to be considered, more air interface resources may be occupied; and more resources may be reduced in the unicast mode when a channel quality difference between different UEs is relatively large, and relatively high transmission efficiency can be achieved in the multicast mode only when channel quality of the UEs is similar. Therefore, determining whether to use the multicast mode or the unicast mode according to whether the channel quality difference between the UEs is greater than a threshold can save bandwidth more effectively.

In addition, the base station may also determine the transmission mode for transmitting the data set to the UE by comprehensively determining the two factors, namely, the quantity of UEs that receive the data set and the channel quality difference between the UEs, or more factors.

Step S103: Send, by using a transmission channel that corresponds to the determined transmission mode, the data set to the UE that receives the data set.

A transmission mode between the base station and UE may be changed as statuses of UEs that receive a same data set change; therefore, the base station determines, according to a status of UE that receives each data set, a transmission mode for transmitting the data set, so as to send the data set to one or more UEs that receive the data set, which can ensure that a user can acquire a required data set at earliest time while saving bandwidth.

The following step is further included between step S102 and step S103:
when the determined transmission mode is the same as an original transmission mode and the status of the UE that receives the data set changes, or when the determined transmission mode is different from an original transmission mode, reconfiguring the transmission channel according to the determined transmission mode. When the determined transmission mode is the unicast mode, a unicast transmission channel is configured between the base station and the UE that receives the data set, and the base station sends, by using the unicast transmission channel, the data set to the UE that receives the data set; or when the determined transmission mode is the multicast mode, a multicast transmission channel is configured between the base station and the UE that receives the data set, and the base station sends, by using the multicast transmission channel, the data set to the UE that receives the data set.

Preferably, the step of reconfiguring the transmission channel according to the determined transmission mode includes: sending a transmission mode configuration message to the UE that receives the data set, where the transmission mode configuration message is used to instruct the UE that receives the data set to acquire the data set from the transmission channel that corresponds to the determined transmission mode.

When the determined transmission mode is the unicast mode, the transmission mode configuration message is used to instruct the UE that receives the data set to acquire the data set from the configured unicast transmission channel; or when the determined transmission mode is the multicast mode, the transmission mode configuration message is used to instruct the UE that receives the data set to acquire the data set from the configured multicast transmission channel.

By using the method for transmitting data provided in Embodiment 1 of the present invention, different transmission modes are configured according to different statuses of UEs that receive a same data set. Therefore, the transmission mode is changed as the statuses of the UEs that receive the same data set change, so that the UEs can immediately acquire the data set no matter when the UEs access a network, and an objective of saving bandwidth can be achieved.

A method for acquiring data provided in Embodiment 2 of the present invention is described in detail below by using FIG. 2 as an example. FIG. 2 is a flowchart of a method for acquiring data according to Embodiment 2 of the present invention. The method for acquiring data is executed by user equipment. As shown in FIG. 2, the method for acquiring data includes the following steps:
Step S201: Receive a transmission mode configuration message sent by a base station.

A transmission mode is a unicast mode or a multicast mode.

Step S202: Change, according to the transmission mode configuration message, a transmission channel for acquiring a data set.

Specifically, when the transmission mode is changed from the unicast mode to the multicast mode, the transmission channel for acquiring the data set is changed to a transmission channel that corresponds to the multicast mode, that is, is changed from a unicast transmission channel to a multicast transmission channel, according to the transmission mode configuration message; or when the transmission mode is changed from the multicast mode to the unicast mode, the transmission channel for acquiring the data set is changed to a transmission channel that corresponds to the unicast mode, that is, is changed from a multicast transmission channel to a unicast transmission channel, according to the transmission mode configuration message.

Step S203: Acquire the data set from a changed transmission channel.

By using the method for acquiring data provided in Embodiment 2 of the present invention, user equipment acquires a data set from a corresponding transmission channel according to a transmission mode configured by a base station, so that the UE can immediately acquire the data set no matter when the UE accesses a network, and an objective of saving bandwidth can be achieved.

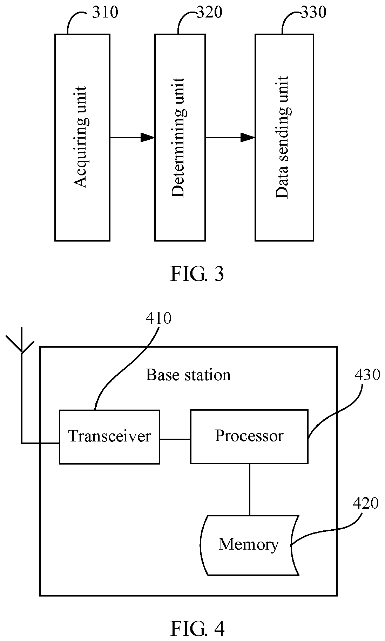

A base station provided in Embodiment 3 of the present invention is described in detail below by using FIG. 3 as an example. FIG. 3 is a schematic structural diagram of a base station according to Embodiment 3 of the present invention. The base station is configured to implement the method for transmitting data provided in Embodiment 1 of the present invention. As shown in FIG. 3, the base station includes an acquiring unit 310, a determining unit 320, and a data sending unit 330.

The acquiring unit 310 is configured to acquire a data set to be sent to UE.

The determining unit 320 is configured to determine, according to a status of the UE that receives the data set, a transmission mode for transmitting the data set.

The transmission mode is a unicast mode or a multicast mode. A quantity of UEs that receive the data set is one or more.

Optionally, the determining unit 320 determines, according to a quantity of UEs that receive the data set, the transmission mode for transmitting the data set. Specifically, the determining unit 320 presets a threshold as a condition for changing the transmission mode, and if the quantity of UEs that receive the data set (including UEs that receive the data set at any moment after a current moment) is not less than the preset threshold, determines that the transmission mode for transmitting the data set to these UEs is the multicast mode; or if the quantity of UEs that receive the data set is less than the preset threshold, determines that the transmission mode for transmitting the data set to these UEs is the unicast mode.

Optionally, the determining unit 320 determines, according to a channel quality difference between multiple UEs that receive the data set, the transmission mode for transmitting the data set. Specifically, the determining unit 320 presets a threshold as a condition for changing the transmission mode, and if the channel quality difference between the multiple UEs that receive the data set is not less than the preset threshold, determines that the transmission mode for transmitting the data set to these UEs is the multicast mode; or if the channel quality difference between the multiple UEs that receive the data set is less than the preset threshold, determines that the transmission mode for transmitting the data set to these UEs is the unicast mode.

In addition, the determining unit 320 may also determine the transmission mode for transmitting the data set to the UE by comprehensively determining the two factors, namely, the quantity of UEs that receive the data set and the channel quality difference between the UEs, or more factors.

The data sending unit 330 is configured to send, by using a transmission channel that corresponds to the determined transmission mode, the data set to the UE that receives the data set.

A transmission mode between the base station and UE may be changed as statuses of UEs that receive a same data set change; therefore, the base station determines, according to a status of UE that receives each data set, a transmission mode for transmitting the data set, so as to send the data set to one or more UEs that receive the data set, which can ensure that a user can acquire a required data set at earliest time while saving bandwidth.

The base station may further include a configuring unit 340.

The configuring unit 340 is configured to: when the transmission mode determined by the determining unit 320 is the same as an original transmission mode and the status of the UE that receives the data set changes, or when the transmission mode determined by the determining unit 320 is different from an original transmission mode, the configuring unit 340 reconfigures the transmission channel according to the determined transmission mode. When the transmission mode determined by the determining unit 320 is the unicast mode, the configuring unit 340 configures a transmission channel between the base station and the UE that receives the data set to a unicast transmission channel, and the data sending unit 330 sends, by using the unicast transmission channel, the data set to the UE that receives the data set; or when the transmission mode determined by the determining unit 320 is the multicast mode, the configuring unit 340 configures a transmission channel between the base station and the UE that receives the data set to a multicast transmission channel, and the data sending unit 330 sends, by using the multicast transmission channel, the data set to the UE that receives the data set.

In addition, the configuring unit 340 is further configured to send a transmission mode configuration message to the UE that receives the data set, where the transmission mode configuration message is used to instruct the UE that receives the data set to acquire the data set from the transmission channel that corresponds to the determined transmission mode.

When the transmission mode determined by the determining unit 320 is the unicast mode, the transmission mode configuration message is used to instruct the UE that receives the data set to acquire the data set from the configured unicast transmission channel; or when the transmission mode determined by the determining unit 320 is the multicast mode, the transmission mode configuration message is used to instruct the UE that receives the data set to acquire the data set from the configured multicast transmission channel.

By using the base station provided in Embodiment 3 of the present invention, different transmission modes are configured according to different statuses of UEs that receive a same data set. Therefore, the transmission mode is changed as the statuses of the UEs that receive the same data set change, so that the UEs can immediately acquire the data set no matter when the UEs access a network, and an objective of saving bandwidth can be achieved.

In hardware implementation, the acquiring unit 310 may be a receiver or a transceiver; the data sending unit 330 may be a transmitter or a transceiver; and the acquiring unit 310 and the data sending unit 330 may be integrated to constitute a transceiver unit, and are a transceiver corresponding to hardware implementation. The foregoing other units excluding the acquiring unit 310 and the data sending unit 330 may be embedded into or independent of a processor of the base station in a hardware form, or may be stored in a memory of the base station in a software form, so that the processor invokes and executes operations corresponding to the foregoing modules. The processor may be a central processing unit (CPU), a microprocessor, a single-chip microcomputer, or the like.

Refer to FIG. 4, which is a schematic structural diagram of a base station according to Embodiment 4 of the present invention. The base station includes a transceiver 410, a memory 420, and a processor 430 that is connected to the transceiver 410 and the memory 420 separately. Certainly, the base station may further include general-purpose components such as an antenna, a baseband processing component, an intermediate radio frequency processing component, and an input/output apparatus, which is not limited in this embodiment of the present invention.

The memory 420 stores a set of program code. The processor 430 is configured to invoke the program code stored in the memory 420 to execute the following operations:
acquiring a data set to be sent to user equipment UE;
determining, according to a status of the UE that receives the data set, a transmission mode for transmitting the data set, where the transmission mode includes a unicast mode or a multicast mode; and
sending the data set to the UE by using a transmission channel that corresponds to the determined transmission mode.

Further, the processor invokes the program code in the memory to further execute the following operation:
when the determined transmission mode is the same as an original transmission mode and the status of the UE changes, or when the determined transmission mode is different from an original transmission mode, configuring a transmission channel to the UE according to the determined transmission mode.

Further, the configuring a transmission channel to the UE according to the determined transmission mode includes:
sending a transmission mode configuration message to the UE, where the transmission mode configuration message is used to instruct the UE to acquire the data set from the transmission channel that corresponds to the determined transmission mode.

Further, the determining, according to a status of the UE that receives the data set, a transmission mode for transmitting the data set is specifically:
if a quantity of UEs that receive the data set is not less than a preset threshold, determining that the transmission mode for transmitting the data set is the multicast mode; or if a quantity of UEs that receive the data set is less than a preset threshold, determining that the transmission mode for transmitting the data set is the unicast mode.

Further, the determining, according to a status of the UE that receives the data set, a transmission mode for transmitting the data set is specifically:
if a channel quality difference between multiple UEs that receive the data set is less than a preset threshold, determining that the transmission mode for transmitting the data set is the multicast mode; or if a channel quality difference between multiple UEs that receive the data set is not less than a preset threshold, determining that the transmission mode for transmitting the data set is the unicast mode.

It should be noted that both the base station provided in Embodiment 3 and the base station provided in Embodiment 4 may be configured to implement the method provided in Embodiment 1.

By using the base station provided in Embodiment 4 of the present invention, different transmission modes are configured according to different statuses of UEs that receive a same data set. Therefore, the transmission mode is changed as the statuses of the UEs that receive the same data set change, so that the UEs can immediately acquire the data set no matter when the UEs access a network, and an objective of saving bandwidth can be achieved.

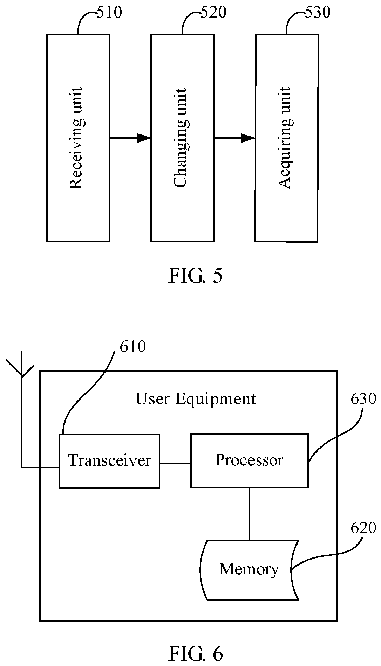

User equipment provided in Embodiment 5 of the present invention is described in detail below by using FIG. 5 as an example. FIG. 5 is a schematic structural diagram of user equipment according to Embodiment 5 of the present invention. The user equipment is configured to implement the method for acquiring data provided in Embodiment 2 of the present invention. As shown in FIG. 5, the user equipment includes a receiving unit 510, a changing unit 520, and an acquiring unit 530.

The receiving unit 510 is configured to receive a transmission mode configuration message sent by a base station. A transmission mode is a unicast mode or a multicast mode.

The changing unit 520 is configured to change, according to the transmission mode configuration message, a transmission channel for acquiring a data set.

Specifically, when the transmission mode is changed from the unicast mode to the multicast mode, the changing unit 520 changes, according to the transmission mode configuration message, the transmission channel for acquiring the data set to a transmission channel that corresponds to the multicast mode, that is, changes the transmission channel from a unicast transmission channel to a multicast transmission channel; or when the transmission mode is changed from the multicast mode to the unicast mode, the changing unit 520 changes, according to the transmission mode configuration message, the transmission channel for acquiring the data set to a transmission channel that corresponds to the unicast mode, that is, changes the transmission channel from a multicast transmission channel to a unicast transmission channel.

The acquiring unit 530 is configured to acquire the data set from a changed transmission channel.

The user equipment provided in Embodiment 5 of the present invention acquires a data set from a corresponding transmission channel according to a transmission mode configured by a base station, so that the UE can immediately acquire the data set no matter when the UE accesses a network, and an objective of saving bandwidth can be achieved.

In hardware implementation, the receiving unit 510 and the acquiring unit 530 may be a receiver or a transceiver, and are a transceiver corresponding to hardware implementation. The foregoing other units excluding the receiving unit 510 and the acquiring unit 530 may be embedded into or independent of a processor of the user equipment in a hardware form, or may be stored in a memory of the user equipment in a software form, so that the processor invokes and executes operations corresponding to the foregoing modules. The processor may be a central processing unit (CPU), a microprocessor, a single-chip microcomputer, or the like.

Refer to FIG. 6, which is a schematic structural diagram of user equipment according to Embodiment 6 of the present invention. The user equipment includes a transceiver 610, a memory 620, and a processor 630 that is connected to the transceiver 610 and the memory 620 separately. Certainly, the user equipment may further include general-purpose components such as an antenna, a baseband processing component, an intermediate radio frequency processing component, and an input/output apparatus, which is not limited in this embodiment of the present invention.

The memory 620 stores a set of program code. The processor 630 is configured to invoke the program code stored in the memory 620 to execute the following operations:
receiving a transmission mode configuration message sent by a base station, where the transmission mode includes a unicast mode or a multicast mode;
changing, according to the transmission mode configuration message, a transmission channel for acquiring a data set; and
acquiring the data set from a changed transmission channel.

Further, when the transmission mode is changed from the unicast mode to the multicast mode, the changing, according to the transmission mode configuration message, a transmission channel for acquiring a data set is specifically:
changing, according to the transmission mode configuration message, the transmission channel for acquiring the data set to a transmission channel that corresponds to the multicast mode.

Further, when the transmission mode is changed from the multicast mode to the unicast mode, the changing, according to the transmission mode configuration message, a transmission channel for acquiring a data set is specifically:
changing, according to the transmission mode configuration message, the transmission channel for acquiring the data set to a transmission channel that corresponds to the unicast mode.

It should be noted that both the user equipment provided in Embodiment 5 and the user equipment provided in Embodiment 6 may be configured to implement the method provided in Embodiment 2.

The user equipment provided in Embodiment 6 of the present invention acquires a data set from a corresponding transmission channel according to a transmission mode configured by a base station, so that the UE can immediately acquire the data set no matter when the UE accesses a network, and an objective of saving bandwidth can be achieved.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention.

## Claims

1. A method for transmitting data, wherein the method comprises:
acquiring (S101) in a base station a data set to be sent to a wireless user equipment, UE;
determining (S102), by the base station according to a status of the UE that receives the data set, a transmission mode for transmitting the data set, wherein when the determined transmission mode is the same as an original transmission mode and the status of the UE changes, or when the determined transmission mode is different from an original transmission mode, configuring a transmission channel to the UE according to the determined transmission mode; wherein the transmission mode comprises a unicast mode or a multicast mode; and
if a quantity of UEs that receive the data set is not less than a preset threshold, and a channel quality difference between multiple UEs that receive the data set is less than a second preset threshold, determining that the transmission mode for transmitting the data set is the multicast mode; or
if a quantity of UEs that receive the data set is less than a preset threshold and a channel quality difference between multiple UEs that receive the data set is not less than a second preset threshold, determining that the transmission mode for transmitting the data set is the unicast mode,
sending (103)
the data set to the UE by using the transmission channel that corresponds to the determined transmission mode.

2. The method according to claim 1, wherein the configuring a transmission channel to the UE according to the determined transmission mode comprises:
sending a transmission mode configuration message to the UE, wherein the transmission mode configuration message is used to instruct the UE to acquire the data set from the transmission channel that corresponds to the determined transmission mode.

3. The method of any of the previous claims, wherein the method comprises:
receiving a transmission mode configuration message sent by the base station wherein the transmission mode comprises a unicast mode or a multicast mode;
changing, according to the transmission mode configuration message, a transmission channel for acquiring a data set; and
acquiring the data set from a changed transmission channel, wherein when a transmission mode determined by the base station is changed from the unicast mode to the multicast mode, the changing, according to the transmission mode configuration message, a transmission channel for acquiring a data set is specifically:
changing, according to the transmission mode configuration message, the transmission channel for acquiring the data set to a transmission channel that corresponds to the multicast mode.

4. The method according to claim 3, wherein when a transmission mode determined by the base station is changed from the multicast mode to the unicast mode, the changing, according to the transmission mode configuration message, a transmission channel for acquiring a data set is specifically:
changing, according to the transmission mode configuration message, the transmission channel for acquiring the data set to a transmission channel that corresponds to the unicast mode.

5. Abase station, wherein the base station comprises:
an acquiring unit (310), configured to acquire a data set to be sent to a wireless UE;
a determining unit (320), configured to determine, according to a status of the UE that receives the data set, a transmission mode for transmitting the data set, wherein the transmission mode comprises a unicast mode or a multicast mode; and
a data sending unit (330), configured to send the data set to the UE by using a transmission channel that corresponds to the determined transmission mode, wherein the base station further comprises:
a configuring unit, configured to: when the determined transmission mode is the same as an original transmission mode and the status of the UE changes, or when the determined transmission mode is different from an original transmission mode, configure the transmission channel to the UE according to the determined transmission mode, and wherein the determining unit (320) is specifically configured to determine:
if a quantity of UEs that receive the data set is not less than a preset threshold, and a channel quality difference between multiple UEs that receive the data set is less than a second preset threshold, determine that the transmission mode for transmitting the data set is the multicast mode; or
if a quantity of UEs that receive the data set is less than a preset threshold and a channel quality difference between multiple UEs that receive the data set is not less than a second preset threshold, determine that the transmission mode for transmitting the data set is the unicast mode.

6. The base station according to claim 5, wherein the configuring unit is further configured to:
send a transmission mode configuration message to the UE, wherein the transmission mode configuration message is used to instruct the UE to acquire the data set from the transmission channel that corresponds to the determined transmission mode.

## Patentansprüche

1. Verfahren zum Übertragen von Daten, wobei das Verfahren Folgendes umfasst:
Erfassen (S101), in einer Basisstation, einer an eine drahtlose Benutzervorrichtung (UE, "User Equipment") zu sendenden Datenmenge;
Bestimmen (S102), durch die Basisstation gemäß einem Status der UE, die die Datenmenge empfängt, eines Übertragungsmodus zum Übertragen der Datenmenge, wobei, wenn der bestimmte Übertragungsmodus der gleiche wie ein ursprünglicher Übertragungsmodus ist und sich die UE ändert, oder wenn sich der bestimmte Übertragungsmodus von einem ursprünglichen Übertragungsmodus unterscheidet, Auslegen eines Übertragungskanals zur UE gemäß dem bestimmten Übertragungsmodus; wobei
der Übertragungsmodus einen Unicast-Modus oder einen Multicast-Modus umfasst; und
wenn eine Anzahl von UEs, die die Datenmenge empfangen, nicht kleiner als eine voreingestellte Schwelle ist, und eine Kanalqualitätsdifferenz zwischen mehreren UEs, die die Datenmenge empfangen, kleiner als eine zweite voreingestellte Schwelle ist, Bestimmen, dass der Übertragungsmodus zum Übertragen der Datenmenge der Multicast-Modus ist; oder
wenn eine Anzahl von UEs, die die Datenmenge empfangen, kleiner als eine voreingestellte Schwelle ist, und eine Kanalqualitätsdifferenz zwischen mehreren UEs, die die Datenmenge empfangen, nicht kleiner als eine zweite voreingestellte Schwelle ist, Bestimmen, dass der Übertragungsmodus zum Übertragen der Datenmenge der Unicast-Modus ist; und
Senden (103) der Datenmenge an die UE durch Verwenden des Übertragungskanals, der dem bestimmten Übertragungsmodus entspricht.

2. Verfahren nach Anspruch 1, wobei das Auslegen eines Übertragungskanals an die UE entsprechend dem bestimmten Übertragungsmodus Folgendes umfasst:
Senden einer Übertragungsmodusauslegungsnachricht an die UE, wobei die Übertragungsmodusauslegungsnachricht verwendet wird, um die UE anzuweisen, die Datenmenge von dem Übertragungskanal zu erfassen, der dem bestimmten Übertragungsmodus entspricht.

3. Verfahren nach einem der vorherigen Ansprüche, wobei das Verfahren Folgendes umfasst:
Empfangen einer durch die Basisstation gesendeten Übertragungsmodusauslegungsnachricht, wobei der Übertragungsmodus einen Unicast-Modus oder einen Multicast-Modus umfasst;
Ändern, gemäß der Übertragungsmodusauslegungsnachricht, eines Übertragungskanals zum Erfassen einer Datenmenge; und
Erfassen der Datenmenge von einem geänderten Übertragungskanal, wobei, wenn ein durch die Basisstation bestimmter Übertragungsmodus von dem Unicast-Modus in den Multicast-Modus geändert wird, das Ändern, gemäß der Übertragungsmodusauslegungsnachricht, ein Übertragungskanal zum Erfassen einer Datenmenge speziell Folgendes ist:
Ändern, gemäß der Übertragungsmodusauslegungsnachricht, des Übertragungskanals zum Erfassen der Datenmenge auf einen Übertragungskanal, der dem Multicast-Modus entspricht.

4. Verfahren nach Anspruch 3, wobei, wenn ein durch die Basisstation bestimmter Übertragungsmodus von dem Multicast-Modus in den Unicast-Modus geändert wird, das Ändern, gemäß der Übertragungsmodusauslegungsnachricht, ein Übertragungskanal zum Erfassen einer Datenmenge speziell Folgendes ist:
Ändern, gemäß der Übertragungsmodusauslegungsnachricht, des Übertragungskanals zum Erfassen der Datenmenge auf einen Übertragungskanal, der dem Unicast-Modus entspricht.

5. Basisstation, wobei die Basisstation Folgendes umfasst:
eine Erfassungseinheit (310), ausgelegt zum Erfassen einer an eine drahtlose UE zu sendenden Datenmenge;
eine Bestimmungseinheit (320), ausgelegt zum Bestimmen, gemäß einem Status der UE, die die Datenmenge empfängt, eines Übertragungsmodus zum Übertragen der Datenmenge, wobei der Übertragungsmodus einen Unicast-Modus oder einen Multicast-Modus umfasst; und
eine Datensendeeinheit (330), ausgelegt zum Senden der Datenmenge an die UE durch Verwenden eines Übertragungskanals, der dem bestimmten Übertragungsmodus entspricht, wobei die Basisstation ferner Folgendes umfasst:
eine Auslegungseinheit, ausgelegt zum: wenn der bestimmte Übertragungsmodus der gleiche wie ein ursprünglicher Übertragungsmodus ist und sich der Status der UE ändert, oder wenn sich der bestimmte Übertragungsmodus von einem unrsprünglichen Übertragungsmodus unterscheidet, Auslegen des Übertragungskanals zur UE gemäß dem bestimmten Übertragungsmodus, und wobei die Bestimmungseinheit (320) speziell ausgelegt ist zum Bestimmen:
wenn eine Anzahl von UEs, die die Datenmenge empfangen, nicht kleiner als eine voreingestellte Schwelle ist, und eine Kanalqualitätsdifferenz zwischen mehreren UEs, die die Datenmenge empfangen, kleiner als eine zweite voreingestellte Schwelle ist, Bestimmen, dass der Übertragungsmodus zum Übertragen der Datenmenge der Multicast-Modus ist; oder
wenn eine Anzahl von UEs, die die Datenmenge empfangen, kleiner als eine voreingestellte Schwelle ist, und eine Kanalqualitätsdifferenz zwischen mehreren UEs, die die Datenmenge empfangen, nicht kleiner als eine zweite voreingestellte Schwelle ist, Bestimmen, dass der Übertragungsmodus zum Übertragen der Datenmenge der Unicast-Modus ist.

6. Basisstation nach Anspruch 5, wobei die Auslegungseinheit ferner ausgelegt ist zum:
Senden einer Übertragungsmodusauslegungsnachricht an die UE, wobei die Übertragungsmodusauslegungsnachricht verwendet wird, um die UE anzuweisen, die Datenmenge von dem Übertragungskanal zu erfassen, der dem bestimmten Übertragungsmodus entspricht.

## Revendications

1. Procédé de transmission de données, lequel procédé consiste à :
acquérir (S101) dans une station de base un ensemble de données à envoyer vers un équipement d'utilisateur, UE, sans fil ;
déterminer (S102), avec la station de base, en fonction du statut de l'UE qui reçoit l'ensemble de données, un mode de transmission pour transmettre l'ensemble de données, dans lequel lorsque le mode de transmission déterminé est le même qu'un mode de transmission original et que le statut de l'UE change, ou lorsque le mode de transmission déterminé est différent d'un mode de transmission original, configurer un canal de transmission vers l'UE en fonction du mode de transmission déterminé ;
dans lequel
le mode de transmission comprend un mode monodiffusion ou un mode multidiffusion ; et
si une quantité d'UE qui reçoivent l'ensemble de données est au moins égale à un seuil prédéterminé, et qu'une différence de qualité de canal entre de multiples UE qui reçoivent l'ensemble de données est inférieure à un second seuil prédéterminé, déterminer que le mode de transmission pour la transmission de l'ensemble de données est le mode multidiffusion ; ou
si une quantité d'UE qui reçoivent l'ensemble de données est inférieure à un seuil prédéterminé et qu'une différence de qualité de canal entre de multiples UE qui reçoivent l'ensemble de données est au moins égale à un second seuil prédéterminé, déterminer que le mode de transmission pour la transmission de l'ensemble de données est le mode monodiffusion ; et
envoyer (S103) l'ensemble de données à l'UE en utilisant le canal de transmission qui correspond au mode de transmission déterminé.

2. Procédé selon la revendication 1, dans lequel configurer un canal de transmission vers l'UE en fonction du mode de transmission déterminé consiste à :
envoyer un message de configuration de mode de transmission à l'UE, dans lequel le message de configuration de mode de transmission est utilisé pour ordonner à l'UE d'acquérir l'ensemble de données depuis le canal de transmission qui correspond au mode de transmission déterminé.

3. Procédé selon l'une quelconque des revendications précédentes, lequel procédé consiste à :
recevoir un message de configuration de mode de transmission envoyé par la station de base, dans lequel le mode de transmission comprend un mode monodiffusion ou un mode multidiffusion ;
changer, en fonction du message de configuration de mode de transmission, un canal de transmission pour acquérir un ensemble de données ; et
acquérir l'ensemble de données depuis un canal de transmission changé, dans lequel lorsqu'un mode de transmission déterminé par la station de base est changé depuis le mode monodiffusion vers le mode multidiffusion, changer, en fonction du message de configuration de mode de transmission, un canal de transmission pour acquérir un ensemble de données consiste spécifiquement à :
changer, en fonction du message de configuration de mode de transmission, le canal de transmission pour acquérir l'ensemble de données pour un canal de transmission qui correspond au mode multidiffusion.

4. Procédé selon la revendication 3, dans lequel lorsqu'un mode de transmission déterminé par la station de base est changé depuis le mode multidiffusion vers le mode monodiffusion, changer, en fonction du message de configuration de mode de transmission, un canal de transmission pour acquérir un ensemble de données consiste spécifiquement à :
changer, en fonction du message de configuration de mode de transmission, le canal de transmission pour acquérir l'ensemble de données pour un canal de transmission qui correspond au mode monodiffusion.

5. Station de base, laquelle station de base comprend :
une unité d'acquisition (310) conçue pour acquérir un ensemble de données à envoyer vers un UE sans fil ;
une unité de détermination (320) conçue pour déterminer, en fonction du statut de l'UE qui reçoit l'ensemble de données, un mode de transmission pour transmettre l'ensemble de données, dans lequel le mode de transmission comprend un mode monodiffusion ou un mode multidiffusion ; et
une unité d'envoi (330) conçue pour envoyer l'ensemble de données à l'UE en utilisant un canal de transmission qui correspond au mode de transmission déterminé, dans lequel la station de base comprend en outre :
une unité de configuration conçue pour : lorsque le mode de transmission déterminé est le même qu'un mode de transmission original et que le statut de l'UE change, ou lorsque le mode de transmission déterminé est différent d'un mode de transmission original, configurer le canal de transmission vers l'UE en fonction du mode de transmission déterminé, et dans laquelle l'unité de détermination (320) est spécifiquement conçue pour :
si une quantité d'UE qui reçoivent l'ensemble de données est au moins égale à un seuil prédéterminé, et qu'une différence de qualité de canal entre de multiples UE qui reçoivent l'ensemble de données est inférieure à un second seuil prédéterminé, déterminer que le mode de transmission pour la transmission de l'ensemble de données est le mode multidiffusion ; ou
si une quantité d'UE qui reçoivent l'ensemble de données est inférieure à un seuil prédéterminé et qu'une différence de qualité de canal entre de multiples UE qui reçoivent l'ensemble de données est au moins égale à un second seuil prédéterminé, déterminer que le mode de transmission pour la transmission de l'ensemble de données est le mode monodiffusion.

6. Station de base selon la revendication 5, dans laquelle l'unité de configuration est en outre conçue pour :
envoyer un message de configuration de mode de transmission à l'UE, dans lequel le message de configuration de mode de transmission est utilisé pour ordonner à l'UE d'acquérir l'ensemble de données depuis le canal de transmission qui correspond au mode de transmission déterminé.
